# EUROPÄISCHE PATENTANMELDUNG

(11) **EP 0 706 763 A2**
(43) Veröffentlichungstag der Anmeldung: **17.04.1996**
(21) Anmeldenummer: 95115284.2
(22) Anmeldetag: 28.09.1995
(51) Int. Cl.: A23F 5/34, B01D 1/18

(54) **Verfahren und Vorrichtung zum Herstellen von Kaffeepulver**

(30) Priorität: 11.10.1994 DE 4436240
(71) Anmelder: A. Heinen GmbH Maschinenfabrik, D-26316 Varel (DE)
(72) Erfinder: Ulrich, Maik, Dr., D-26135 Oldenburg (DE)
(74) Vertreter: Hiss, Ludwig, Pat. Ass. Dipl.-Ing.

(57) **Zusammenfassung**

Zum Herstellen eines sprühgetrockneten Kaffeepulvers wird ein Kaffeekonzentrat mit einem Druck von 0 bis 4 bar einer Zweistoff-Sprühdüse (13) zugeführt und mit einem separat zugeführten gasförmigen Zerstäubungsmedium aus einer Druckgasquelle (21) in die Trockenkammer (3) einer Trocknungseinrichtung (1) versprüht. Das Zerstäubungsmedium hat dabei einen Druck von 3,5 bis 6 bar. Das Kaffeekonzentrat wird aus einem Konzentratvorrat (16) mittels einer Kreiselpumpe (17) unter einem Druck von etwa 0 bis 4 bar zu einer Mischdüse (24) gefördert, wo es vor dem Versprühen mit einem Aufschäumungsmedium aus der Druckquelle (21) intensiv vermischt wird. Durch Einstellen des Druckes des Aufschäumungsmediums wird das Schüttgewicht vorgegeben.

Die Erfindung hat den Vorteil, daß für das Versprühen des Kaffeekonzentrats Niederdruck ausreicht und daß allein durch Einstellung des Druckes des Aufschäumungsmediums in der Mischdüse (24) in einem weiten Bereich das Schüttgewicht des fertigen Kaffeepulvers beeinflußt werden kann.

## Beschreibung

Die Erfindung betrifft ein Verfahren zum Herstellen eines sprühgetrockneten Kaffeeprodukts oder anderer derartiger Produkte, bei dem ein Kaffeekonzentrat einer Sprühdüse zugeführt und in eine Trockenkammer hinein versprüht wird.

Die Erfindung betrifft ebenfalls eine Vorrichtung zum Herstellen eines sprühgetrockneten Kaffeeprodukts oder anderer derartiger Produkte mit einer Trockenkammer, einem ein Kaffeekonzentrat enthaltenden Vorrat, einer das Kaffeekonzentrat in die Trockenkammer versprühenden Sprühdüse und einer Fördereinrichtung mit einer den Konzentratvorrat mit der Sprühdüse verbindenden Förderleitung.

Unter "anderen derartigen Produkten" sind allgemein solche Erzeugnisse zu verstehen, die wie Kaffeextrakt durch Sprühtrocknung aus einem Konzentrat hergestellt werden. Dabei handelt es sich in erster Linie um flüssige Nahrungs- oder Genußmittel wie Milchpulver oder Instant-Getränke. Aber auch Erzeugnisse aus anderen Bereichen können gemäß der Erfindung behandelt werden. Wenn hier von Kaffeekonzentrat, Kaffeepulver usw. gesprochen wird, so ist dieselbe Behandlung anderer Produkte also nicht ausgeschlossen.

Zum Herstellen von löslichem Kaffeepulver wird ein Kaffeekonzentrat erzeugt, das zum Sprühtrocknen in einen Sprühturm versprüht wird. Dabei wird mit Konzentrationen des Kaffeekonzentrats von 20 bis 45% gearbeitet. Das Versprühen des Konzentrats in die Trockenkammer des Sprühturms erfolgt mittels Einstoffdüsen in einem Druckbereich von 40 - 80 bar. Durch eine Stickstoff- oder Kohlendioxydzugabe zum Konzentrat können das Schüttgewicht und die Farbe des Kaffeepulvers beeinflußt werden.

Der Erfindung liegt die Aufgabe zugrunde, das Verfahren und die Vorrichtung der eingangs beschriebenen Art weiter zu verbessern.

Gelöst wird diese Aufgabe bei einem Verfahren der eingangs angegebenen Art erfindungsgemäß dadurch, daß der Sprühdüse zusätzlich ein gasförmiges Zerstäubungsmedium unter Druck zugeführt wird und daß das Konzentrat vom Zerstäubungsmedium aus der Sprühdüse in die Trockenkammer hinein versprüht wird. Auf diese Weise wird der Druck, der für das Zerstäuben des Konzentrats in der Trockenkammer erforderlich ist, nicht über das Konzentrat selbst zugeführt, sondern durch ein separetes Zerstäubungsmedium. Dadurch ist es möglich, bei der Zerstäubung des Konzentrats mit niedrigeren Drücken zu arbeiten, was den konstruktiven und apparativen Aufwand für die Vorrichtung gegenüber dem Einsatz von Hochdruck bei herkömmlichen Sprühtürmen erheblich herabsetzt.

Gemäß der Erfindung ist weiter vorgesehen, daß durch Einstellen des Drucks des gasförmigen Zerstäubungsmediums die Tropfengrösse des zerstäubten Kaffeekonzentrats beeinflußt wird. Der Druck des Zerstäubungsmediums wird dabei auf einen Wert von etwa 3 bis 6 bar eingestellt.

Dieses Vorgehen nach der Erfindung, bei dem das Kaffeekonzentrat in einer "Zweistoffdüse" in die Trockenkammer hinein versprüht wird, führt zu einem sehr feinkörnigen Kaffeepulver, dessen Teilchengröße kleiner als 125 µ sein wird. Dadurch ergeben sich Schüttgewichte des Kaffeepulvers von 300 bis 350 Gramm pro Liter. Um kleiner, Schüttgewichte zu realisieren, ist in Fortsetzung der Erfindung vorgesehen, daß das Kaffeekonzentrat vor dem Versprühen mit einem gasförmigen Aufschäumungsmedium vermischt wird und daß die KonzentratAufschäumungsmedium-Mischung durch die Sprühdüse in die Trockenkammer hinein versprüht wird. Aus dieser Maßnahme resultieren Partikelgrößen im Bereich von 250 bis 500 µ und Schüttgewichte des Kaffeepulvers bis hinunter zu 180 Gramm pro Liter.

Um aufgrund der Sprühtrocknung ein möglichst homogenes Kaffeeprodukt zu erhalten, sieht die Erfindung weiter vor, daß das Aufschäumungsmedium im Kaffeekonzentrat gleichmäßig verteilt und suspendiert wird. So ergibt sich eine Mischung aus Kaffeekonzentrat und Aufschäumungsmedium, bei der die Anteile der Bestandteile im Volumen gleichmäßig verteilt sind.

Gemäß einer weiteren, bevorzugten Fortführung der Erfindung ist vorgesehen, daß das Aufschäumungsmedium unter einem einstellbaren Arbeitsdruck in das Kaffeekonzentrat eingebracht wird und daß durch Einstellen des Arbeitsdrucks das Schüttgewicht des sprühgetrockneten Kaffeepulvers beeinflußt wird. Durch Einstellen des Arbeitsdrucks des Aufschäumungsmediums zwischen 0 und 3 bar werden auf diese Weise Schüttgewichte des sprühgetrockneten Kaffeepulvers zwischen etwa 450 und 180 Gramm pro Liter erzielt. Gemäß der Erfindung erfolgt also das Einstellen der Schüttgewichte des sprühgetrockneten Kaffeepulvers in einem weiten Bereich allein durch Einstellen des Arbeitsdrucks des Aufschäumungsmediums, so daß aufwendige Umrüstungsarbeiten an der Sprüheinrichtung nicht erforderlich sind, um gewünschte Schüttgewichte zu realisieren.

Vorzugsweise wird das Kaffeekonzentrat mit Luft als Aufschäumungsmedium vermischt. Damit ergibt sich eine einfache und preiswerte Möglichkeit, Kaffeepulver mit einem vorgegebenen Schüttgewicht zu erzeugen. Sollte es aus lebensmittelrechtlichen oder mikrobiologischen Gründen erforderlich sein, kann als Aufschäumungsmedium allerdings auch ein Inertgas, wie z.B. Kohlendioxyd oder Stickstoff eingesetzt werden.

Bei einer Vorrichtung der eingangs beschriebenen Art wird die der Erfindung zugrundeliegende Aufgabe erfindungsgemäß dadurch gelöst, daß die Sprühdüse als Zweistoffdüse ausgebildet ist, an welche außer der das Kaffeekonzentrat zuführenden Förderleitung eine weitere mit einer Druckgasquelle verbundene Leitung zum Zuführen eines gasförmigen Zerstäubungsmediums angeschlossen ist.

Merkmale von Fortführungen und vorteilhaften Weiterbildungen der Erfindung sind in den Unteransprüchen 10 bis 19 aufgeführt. Dabei beziehen sich die Ansprüche 10 und 11 auf vorteilhafte Maßnahmen im Zusammenhang mit der Zerstäubung des Kaffeekonzentrats durch die Sprühdüse in die Trockenkammer hinein. Vorteilhaft ist gemäß Anspruch 11, daß für das Versprühen des Kaffeekonzentrats durch die eingesetzte Zweistoffsprühdüse ein Druck von 3 bis 6 bar ausreicht. Gemäß der Erfindung ist es also nicht erforderlich, mit höheren Drücken bzw. mit Hochdruck zu arbeiten, wie das bei bekannten Vorrichtungen mit Einstoffdüsen üblich ist, die Drücke von 40 bis 80 bar erfordern.

Die im Anspruch 12 enthaltenen Maßnahmen dienen der Verringerung des Schüttgewichts des sprühgetrockneten Kaffeepulvers, um den Einsatzbereich der erfindungsgemäß vorgeschlagenen Vorrichtung in diese Richtung zu erweitern. Die Ansprüche 13 bis 16 betreffen die Einstellbarkeit des Druckes des Aufschäumungsmediums, die es ermöglicht, ein bestimmtes Schüttgewicht des fertigen Kaffeepulvers vorzugeben. Dabei ist im Anspruch 16 der Rahmen angegeben, der zu Schüttgewichten des Kaffeepulvers von 180 bis 400 Gramm pro Liter führt. Die Ansprüche 17 bis 19 betreffen eine Fortführung der Erfindung, die sich auf eine spezielle Gestaltung der Mischdüse bezieht. Mit den in diesen Ansprüchen angegebenen Maßnahmen wird eine innige Vermischung des Aufschäumungsmediums mit dem Konzentrat erreicht und es wird eine intensive Homogenisierung des Konzentrats vor der Vermischung mit dem Aufschäumungsmedium bewirkt.

Durch die Erfindung ist es möglich, das Sprühtrocknen von Kaffeekonzentrat ohne die Anwendung von Hochdruck zu realisieren. Das erspart Hochdruckaggregate und die übrigen Vorkehrungen, die beim Einsatz von Hochdruck erforderlich sind, und setzt somit den konstruktiven und apparativen Aufwand erheblich herab. Zusatzlich kann in einem weiten Bereich das Schüttgewicht des Kaffeepulvers eingestellt werden, ohne daß aufwendige Umbaumaßnahmen an der Spruhdüse erforderlich sind. Durch die Erfindung ist sichergestellt, daß mit verringertem Aufwand ein möglichst homogenes und somit qualitativ hochwertiges Kaffeeprodukt erzeugt wird, dessen wesentliche Eigenschaften mit einfachen Maßnahmen beeinflußt werden können.

Die Erfindung wird nun anhand der Zeichnung näher erläutert.

Es zeigen:
- Figur 1: eine Vorrichtung nach der Erfindung in einer Prinzipdarstellung, die auch den Ablauf des Verfahrens veranschaulicht,
- Figur 2: eine Detaildarstellung einer Mischdüse nach der Erfindung und
- Figur 3: einen Schnitt entlang der Linie A-B in Figur 2.

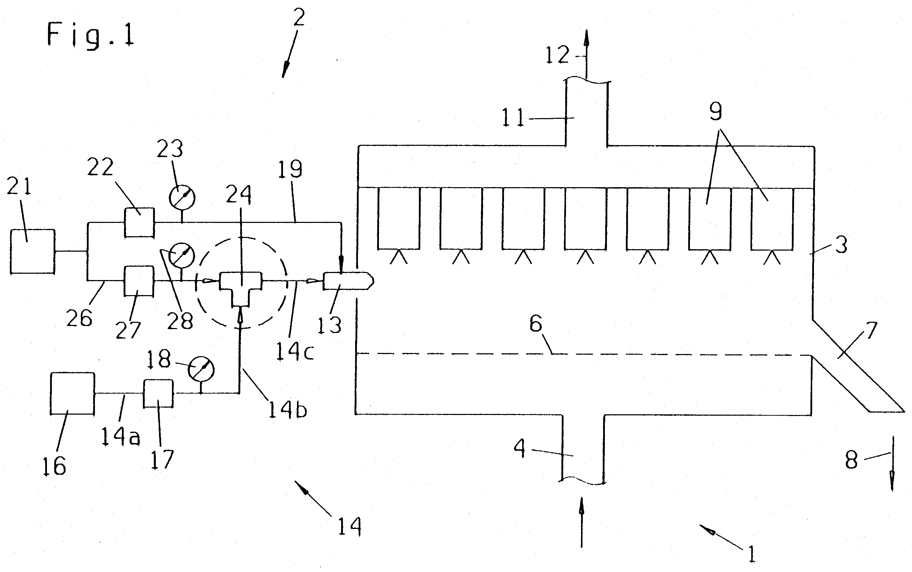

Figur 1 zeigt eine Vorrichtung gemäß der Erfindung zum Herstellen von Pulverkaffee. Sie besteht in der dargestellten Ausführungsform aus einer Trocknungseinrichtung 1 und einer vorgeschalteten Fördereinrichtung 2 für ein zu versprühendes und zu trocknendes Kaffeekonzentrat.

Die Trocknungseinrichtung 1 weist eine Trockenkammer 3 mit einem Einlaß 4 für die Zuleitung eines geeigneten Trocknungsmediums, beispielsweise Warmluft, auf. Ein Siebboden 6 innerhalb der Trockenkammer 3 verteilt die Trockenluft gleichmäßig im Innern der Trockenkammer und leitet das getrocknete Kaffeepulver zu einem Auslaß 7, bei dem die Entnahme des getrockneten Gutes mit einem Pfeil 8 angedeutet ist. Zum Fördern des Trockengutes durch die Trockenkammer wird diese mit in der Zeichnung nicht dargestellten, aber bekannten Mitteln in eine schwingende Bewegung versetzt. An dar Oberseite der Trockenkammer 3 tritt die aufsteigende Trocknungsluft durch Filter 9 zum Auffangen von mitgeführtem Trockengut und einen Auslaß 11 aus, was durch einen Pfeil 12 angedeutet ist. Zum Ausfiltern des mit der Trockenluft mitgeführten Trocknungsgutes können Filter eingesetzt werden, wie sie in der deutschen Patentanmeldung P 44 03 634 beschrieben sind.

Mit einer als Zweistoffdüse ausgebildeten Sprühdüse 13 wird ein zu trocknendes Kaffeekonzentrat in die Trockenkammer 3 der Trocknungseinrichtung 1 hinein versprüht. Die Sprühdüse 13 ist über eine Förderleitung 14, die Förderleitungsabschnitte 14a, b und c aufweist, mit einem Konzentratvorrat 16 verbunden. Eine zwischen den Förderleitungsabschnitten 14a und 14b angeordnete Pumpe 17 fördert das Kaffeekonzentrat zur Sprühdüse 13 und hält einen vorgegebenen Druck aufrecht, der mit einem Druckmeßmittel 18 kontrolliert und angezeigt wird. Für diesen Transport des Kaffeextrakts z B. kann eine Kreiselpumpe eingesetzt werden, die 2 bis 4 bar Förderdruck erzeugt.

Die in der Sprühdüse erforderliche Zerstäubungsenergie wird durch Druckluft oder durch eim komprimiertes Gas aufgebracht. Dazu ist die Zweistoffdüse 13 über eine Gasleitung 19 mit einer Druckgasquelle 21 verbunden. Bei der Druckgasquelle 21 kann es sich um einen Preßluftvorrat handeln. Über ein Druckeinstellmittel, beispielsweise ein Reduzierventil 22 und die Leitung 19 ist dieser Preßluftvorrat mit der Sprühdüse 13 verbunden. Ein Druckmeßmittel 23 kontrolliert den Druck des als Zerstäubungsmedium dienenden Gases in der Gasleitung 19. Als Sprühdüse 13 kann eine Außenmischerdüse eingesetzt werden, der das Zerstäubungsmedium, also beispielsweise die Preßluft, unter einem Druck von 3,5 bis 6 bar zugeführt wird. Die Anwendung von Hochdruck, wie sie der Einsatz von bekannten Einstoffdüsen erfordert, ist hier nicht vorgesehen.

Im Zuge der Förderleitung 14 für das Kaffeekonzentrat ist zwischen den Förderleitungsabschnitten 14b und 14c eine Mischdüse 24 angeordnet. An diese Mischdüse 24 ist außer den Leitungsabschnitten 14b und 14c eine weitere Leitung 26 angeschlossen, durch welche ein gasförmiges Aufschäumungsmedium, z. B. Preßluft aus dem Preßluftvorrat 21, zugeführt wird. Die Leitung 26 weist ein Druckeinstellmittel, beispielsweise ein Reduzierventil 27 und ein Druckmeßmittel 28 auf, mit denen ein gewünschter Druck des Aufschäumungsmediums eingestellt werden kann.

Als Druckmeßmittel 18, 23 und 28 können Manometer oder andere geeignete Druckmeßeinrichtungen eingesetzt werden. Mittels dieser Druckmeßeinrichtungen und der jeweils zugehörigen Ventile ist auch eine automatische Drucksteuerung möglich, was hier nicht eigens dargestellt ist.

Die Zuführung des gasförmigen Aufschäumungsmediums zur Mischdüse bewirkt, daß das durch die Mischdüse 24 strömende Kaffeekonzentrat mit diesem Aufschäumungsmedium gemischt und dabei aufgeschäumt wird.

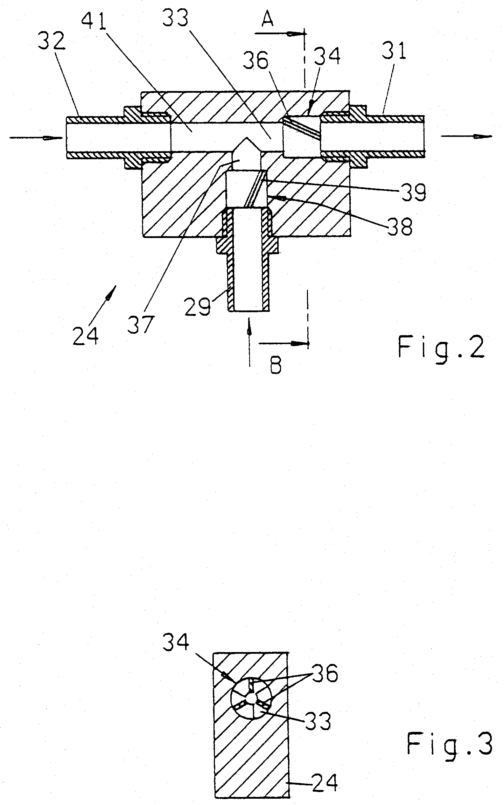

Die Mischdüse 24 ist in einem Querschnitt in der Figur 2 dargestellt. Die Anschlüsse 29 und 31 der Mischdüse 24 sind mit den Leitungsabschnitten 14b bzw. 14c der Förderleitung 14 verbunden. Ein weiterer Anschluß 32 dient der Verbindung mit der Gasleitung 26 zum Zuführen des Aufschäumungsmediums. In dem zum Anschluß 31 führenden Leitungszweig 33 innerhalb der Mischdüse 24 ist ein Drallkörper 34 angeordnet, der aus wendelförmig verlaufenden Führungsflächen 36 besteht. In Figur 3, welche einen Schnitt entlang der Linie A-B zeigt, ist das deutlich dargestellt. Dieser Drallkörper 34 dient dem innigen Vermischen des Kaffeekonzentrats mit dem Aufschäumungsmedium.

In einem weiteren Leitungszweig 37 der Mischdüse 24, welcher über den Anschluß 29 mit dem Förderleitungsabschnitt 14b verbunden ist, ist ein weiterer Drallkörper 38 eingesetzt, welcher mit wendelförmig verlaufenden, etwa radial zur Leitungsachse angeordneten Führungsflächen 39 einer intensiven Homogenisierung des noch nicht aufgeschäumten Kaffeekonzentrats dient.

Ein dritter Leitungszweig 41 der Mischdüse 24 ist für die Zuführung des gasförmigen Aufschäumungsmediums zum Kaffeekonzentrat vorgesehen und über den Anschluß 32 mit der Gasleitung 26 verbunden.

Wird ein Kaffeekonzentrat mit einer Zweistoffdüse 13 in die Trockenkammer 3 einer Trocknungseinrichtung 1 hinein versprüht, so ergibt sich ein sehr feines Tropfenspektrum, das sich durch den Druck des durch die Gasleitung 19 zugeführten Zerstäubungsmediums einstellen läßt. Es entstehen sehr feine Extraktkaffeepartikel. Die auf diese Weise erreichbaren Schüttgewichte des sprühgetrockneten Kaffeepulvers liegen im Bereich von 320 bis 450 Gramm pro Liter. Um zu den vom Markt verlangten kleineren Schüttgewichten des Kaffeepulvers von 200 bis 220 Gramm pro Liter zu kommen, wird das Kaffeekonzentrat vor dem Versprühen mit einem Aufschäumungsmedium vermischt und aufgeschäumt.

Dazu wird im Betrieb ein Kaffeekonzentrat aus dem Konzentratvorrat 16 mittels der Pumpe 17 durch die Förderleitungsabschnitte 14a und 14b zum Anschluß 29 der Mischdüse 24 gefördert. Das Kaffeekonzentrat hat eine Konzentration von 15 bis 45 % und eine Temperatur von 10 bis 80 °C. Es wird mittels der Pumpe 17 unter einem Druck von 2 bis 4 bar gefördert. In der Mischdüse 24 wird das Kaffeekonzentrat durch den Drallkörper 38 intensiv homogenisiert, bevor es mit einem gasförmigen Aufschäumungsmedium vermischt wird, das aus dem Vorrat 21 über die Leitung 26 zum Anschluß 32 der Mischdüse 24 gelangt. Der Vorrat 21 enthält das Aufschäumungsmedium unter einem erhöhten Druck, der mit dem Druckeinstellmittel, beispielsweise einem Reduzierventil 27 auf einen gewünschten Wert zwischen 0 und 3 bar herabgesetzt wird. Als Aufschäumungsmedium wie auch als Zerstäubungsmedium kommt in erster Linie Preßluft in Frage. Anstelle von Preßluft können als Aufschäumungsmedium und/oder als Zerstäubungsmedium auch Inertgase wie Kohlendioxyd oder Stickstoff oder andere geeignete Gase eingesetzt werden. Das Aufschäumungsmittel-Kaffeekonzentrat-Gemisch tritt durch den Anschluß 31 der Mischdüse 24 aus, wobei der im Leitungszweig 33 der Mischdüse angeordnete Drallkörper 34 eine innige Vermischung von Aufschäumungsmedium und Kaffeekonzentrat bewirkt, so daß Bläschen des Aufschäumungsmediums im Konzentrat gleichmäßig suspendiert sind. Das Gemisch gelangt unter dem Druck der Pumpe 17 und des Aufschäumungsmediums durch den Förderleitungsabschnitt 14c zur Sprühdüse 13. Über die Gasleitung 19 wird der Sprühdüse das Zerstäubungsmedium aus dem Gasvorrat 21 zugeführt, dessen Druck durch das Druckeinstellmittel, z.B. ein Reduzierventil 22 auf einen gewünschten Wert zwischen 3,5 und 6 bar, also auf einen Wert im Niederdruckbereich, eingestellt wird. Das Zerstäubungsmedium zerstäubt das Kaffeekonzentrat-Aufschäumungsmedium-Gemisch aus der Sprühdüse 13 in die Trockenkammer 3 der Trocknungseinrichtung 1 hinein. Der Druck des zur Mischdüse 24 gelangenden Aufschäumungsmediums beeinflußt das Schüttgewicht des auf diese Weise hergestellten Kaffeepulvers, das sich bei Drücken zwischen 0 und 3 bar auf Werte von 450 bis 180 Gramm pro Liter einstellt. Die Trocknungsluft, die durch den Lufteinlaß 4 zugeführt wird, hat vorzugsweise eine Temperatur zwischen 110 und 160°C. Im Normalbetrieb stellt sich dann die Temperatur der aus dem Luftauslaß austretenden Trocknungsluft auf 80 bis 100°C ein.

Die beschriebene Vorrichtung erlaubt es, in einem weiten Bereich ein Schüttgewicht des fertigen Kaffeepulvers einzustellen, ohne daß an der Sprühdüse 13 irgendwelche aufwendige Manipulationen, Austausch- oder Montagearbeiten erforderlich sind und ohne daß für das Versprühen des Konzentrats die bei bekannten Anlagen erforderlichen hohen Zerstäubungsdrücke mit all ihren Nachteilen angewendet werden müssen. Allein durch Einstellen des Drucks des Aufschäumungsmediums zwischen 0 und 3 bar können Schüttgewichte des Kaffeepulvers von etwa 450 bis etwa 180 Gramm pro Liter erzielt werden. Damit ist es auf einfache Weise auch möglich, die vom Markt für Kaffeepulver geforderten Schüttgewichte von 200 bis 220 Gramm pro Liter auf einfache Weise zu erreichen.

## Patentansprüche

1. Verfahren zum Herstellen eines sprühgetrockneten Kaffeeprodukts oder anderer derartiger Produkte, bei dem ein Kaffeekonzentrat einer Sprühdüse zugeführt und in eine Trockenkammer hinein versprüht wird, dadurch gekennzeichnet, daß der Sprühdüse zusätzlich ein gasförmiges Zerstäubungsmedium unter Druck zugeführt wird und daß das Konzentrat vom Zerstäubungsmedium aus der Sprühdüse in die Trockenkammer hinein vesprüht wird.

2. Verfahren nach Anspruch 1, dadurch gekennzeichnet, daß durch Einstellen des Drucks des gasförmigen Zerstäubungsmediums die Tropfengröße des zerstäubten Kaffeekonzentrats beeinflußt wird.

3. Verfahren nach Anspruch 1 oder 2, dadurch gekennzeichnet, daß der Druck des Zerstäubungsmediums auf einen Wert von etwa 3 bis 6 bar eingestellt wird.

4. Verfahren nach einem der Ansprüche 1 bis 3, dadurch gekennzeichnet, daß das Kaffeekonzentrat vor dem Versprühen mit einem gasförmigen Aufschäumungsmedium vermischt wird und daß die Konzentrat-Aufschäumungsmedium-Mischung durch die Sprühdüse in die Trockenkammer hinein versprüht wird.

5. Verfahren nach Anspruch 4, dadurch gekennzeichnet, daß das Aufschäumungsmedium im Kaffeekonzentrat gleichmäßig verteilt und suspendiert wird.

6. Verfahren nach Anspruch 4 oder 5, dadurch gekennzeichnet, daß das Aufschäumungsmedium unter einem einstellbaren Arbeitsdruck in das Kaffeekonzentrat eingebracht wird und daß durch Einstellen des Arbeitsdrucks das Schüttgewicht des sprühgetrockneten Kaffeepulvers beeinflußt wird.

7. Verfahren nach Anspruch 6, dadurch gekennzeichnet, daß durch Einstellen des Arbeitsdrucks des Aufschäumungsmediums zwischen 0 und 3 bar Schüttgewichte des sprühgetrockneten Kaffeepulvers zwischen etwa 450 und 180 Gramm pro Liter erzielt werden.

8. Verfahren nach einem der Ansprüche 4 bis 7, dadurch gekennzeichnet, daß das Kaffeekonzentrat mit Luft oder einem Inertgas wie Stickstoff oder Kohlendioxyd als Aufschäumungsmedium vermischt wird.

9. Vorrichtung zum Herstellen eines sprühgetrockneten Kaffeeprodukts oder anderer derartiger Produkte mit einer Trockenkammer, einem ein Kaffeekonzentrat enthaltenden Vorrat, einer das Kaffeekonzentrat in die Trockenkammer versprühenden Sprühdüse und einer Fördereinrichtung mit einer den Konzentratvorrat mit der Sprühdüse verbindenden Förderleitung, dadurch gekennzeichnet, daß die Sprühdüse (13) als Zweistoffdüse ausgebildet ist, an welche außer der das Kaffeekonzentrat zuführenden Förderleitung (14) eine weitere mit einer Druckgasquelle (21) verbundene Leitung (19) zum Zuführen eines gasförmigen Zerstäubungsmediums angeschlossen ist.

10. Vorrichtung nach Anspruch 9, dadurch gekennzeichnet, daß als Druckgasquelle (21) eine Preßluftquelle vorgesehen ist.

11. Vorrichtung nach Anspruch 10, dadurch gekennzeichnet, daß Mittel (22) zum Einstallen des Drucks des gasförmigen Zerstäubungsmediums in der Sprühdüse (13) auf Werte von etwa 3 bis 6 bar vorgesehen sind.

12. Vorrichtung nach einem der Ansprüche 9 bis 11, dadurch gekennzeichnet, daß die Fördereinrichtung (2) eine in die Förderleitung (14) integrierte Mischdüse (24) mit einem Anschluß (32) zum Zuführen eines gasförmigen Aufschäumungsmediums aufweist und daß an den Anschluß (32) eine die Mischdüse (24) mit einer Quelle (21) des Aufschäumungsmediums verbindende Gasleitung (26) angeschlossen ist.

13. Vorrichtung nach Anspruch 12, dadurch gekennzeichnet daß als Aufschäumungsmedium Luft vorgesehen ist.

14. Vorrichtung nach Anspruch 12 oder 13, dadurch gekennzeichnet, daß der an die Mischdüse (24) angeschlossenen Gasleitung (26) Mittel (27) zum Einstellen des Druckes des zugeführten Aufschäumungsmediums zugeordnet sind.

15. Vorrichtung nach einem der Ansprüche 9 bis 14, dadurch gekennzeichnet, daß dem den Konzentratvorrat (16) mit der Mischdüse (24) verbindenden Förderleitungsabschnitt (14a, 14b) Einstellmittal (17) zum Einstellen des Konzentratdruckes auf einen dem Druck des Aufschäumungsmediums im wesentlichen entsprechenden Druck zugeordnet sind.

16. Vorrichtung nach Anspruch 14 oder 15, dadurch gekennzeichnet, daß die Einstellmittel (17) zum Einstellen eines Druckes von etwa 0 bis 4 bar ausgebildet sind.

17. Vorrichtung nach einem der Ansprüche 12 bis 16, dadurch gekennzeichnet, daß die Mischdüse (24) in dem die Konzentrat-Medium-Mischung abführenden Zweig (33) Mittel (34) zum innigen Vermischen von Konzentrat und Aufschäumungsmedium aufweist.

18. Vorrichtung nach einem der Ansprüche 12 bis 17, dadurch gekennzeichnet, daß die Mischdüse (24) in dem das Konzentrat zuführenden Zweig (37) Mittel (38) zum intensiven Homogenisieren des Konzentrats vor der Vermischung mit dem Aufschäumungsmedium aufweist.

19. Vorrichtung nach Anspruch 17 oder 18, dadurch gekennzeichnet, daß als Vermischungsmittel (34) und/oder Homogenisierungsmittel (38) Drallkörper in die betreffenden Zweige (33, 37) der Mischdüse (24) eingesetzt sind.

20. Vorrichtung nach einem der Ansprüche 15 bis 19, dadurch gekennzeichnet, daß als Einstellmittel (17) zum Einstellen des Konzentratdruckes eine Kreiselpumpe oder dergleichen vorgesehen ist.
